# EUROPEAN PATENT APPLICATION

(11) **EP 4 822 319 A1**
(43) Date of publication of application: **14.10.2026**
(21) Application number: 26168688.5
(22) Date of filing: 27.03.2026
(51) Int. Cl.: G01L 9/02, G01L 9/06, G01L 9/12, G06F 17/40

(54) **DEVICE AND METHOD FOR WATER IN, WATER OUT DETECTION**

(30) Priority: 08.04.2025 US 202519173337
(71) Applicant: STMicroelectronics International N.V., 1228 Plan-les-Ouates, Geneva (CH)
(72) Inventor: RIVOLTA, Stefano Paolo, 20864 AGRATE BRIANZA (MB) (IT); ARCERI, Daniele, 20864 AGRATE BRIANZA (MB) (IT); FERRARA, Eleonora, 20864 AGRATE BRIANZA (MB) (IT); MAGNANI, Alessandro, 20864 AGRATE BRIANZA (MB) (IT)
(74) Representative: Studio Torta S.p.A.

(57) **Abstract**

In accordance with various embodiments of the present disclosure, a method for detecting if a device is in water or not in water is provided. In some embodiments, the method comprises detecting, by a finite state machine (FSM) using pressure data from a pressure sensor, pressure indicative of whether the device is in water or not in water; transitioning, by the FSM based on the detected pressure, between different states of the FSM; and determining, by the FSM based on the detected pressure, a desired full-scale range of the pressure sensor.

## Description

### FIELD OF THE INVENTION

Example embodiments of the present disclosure relate generally to pressure sensors and, more particularly, using pressure sensors to detect whether a device is in water or out of water.

### BACKGROUND

Pressure sensors are commonly used in mobile and wearable devices, such as mobile phones and smart watches. Such pressure sensors are used to determine air pressure, which may be used to determine the altitude of the device (and therefore of a user of the device). Such mobile and wearable devices are more commonly being waterproofed, which means that the devices more commonly include waterproof pressure sensors.

Such waterproof pressure sensors may be used to determine if the device (and therefore the user of the device) is out of water or in water. This may be termed "water in / water out (WI/WO) detection." This information can be used by the device to enable or disable apps, for example to disable driving-related apps and enable swimming-related apps if it is detected that the device is in water.

Applicant has identified many technical challenges and difficulties associated with using pressure sensors to detect whether a device is in water or out of water. Through applied effort, ingenuity, and innovation, Applicant has solved problems related to using pressure sensors to detect whether a device is in water or out of water by developing solutions embodied in the present disclosure, which are described in detail below.

### BRIEF SUMMARY

Various embodiments described herein relate to methods and devices for detecting if a device is in water or not in water. The invention relates to a method and a device as set out in the appended claims.

In accordance with various embodiments of the present disclosure, a method for detecting if a device is in water or not in water is provided. In some embodiments, the method comprises detecting, by a finite state machine (FSM) using pressure data from a pressure sensor, pressure indicative of whether the device is in water or not in water; transitioning, by the FSM based on the detected pressure, between different states of the FSM; and determining, by the FSM based on the detected pressure, a desired full-scale range of the pressure sensor.

In some embodiments, the method further comprises automatically changing from a first full-scale range of the pressure sensor to a second full-scale range of the pressure sensor or from the second full-scale range of the pressure sensor to the first full-scale range of the pressure sensor based on the determined desired full-scale range of the pressure sensor.

In some embodiments, the method further comprises adjusting the pressure data from the pressure sensor to have a baseline of zero bar. The adjusted pressure data is used by the FSM to detect pressure indicative of whether the device is in water or not in water.

In some embodiments, adjusting the pressure data from the pressure sensor to have a baseline of zero bar comprises calculating an integral of a derivative of the pressure data from the pressure sensor.

In some embodiments, the method further comprises passing the pressure data from the pressure sensor through a high pass filter to obtain the derivative of the pressure data from the pressure sensor.

In some embodiments, the method further comprises comparing an absolute value of the derivative of the pressure data from the high pass filter to a noise threshold; if the absolute value of the derivative of the pressure data from the high pass filter exceeds the noise threshold, adding the derivative of the pressure data from the high pass filter to an immediately preceding calculated integral of the derivative of the pressure data from the pressure sensor; and if the absolute value of the derivative of the pressure data from the high pass filter does not exceed the noise threshold, resetting the integral of the derivative of the pressure data from the pressure sensor to zero.

In some embodiments, the different states of the FSM comprise (i) a water out (WO) state indicating that the device is not in water, (ii) a water in (WI) state indicating that the device is in water, (iii) a water out to water in (WO-WI) state indicating that the device is transitioning from not in water to in water, and (iv) a water in to water out (WI-WO) state indicating that the device is transitioning from in water to not in water.

In some embodiments, transitioning between different states of the FSM based on the detected pressure changes comprises comparing the adjusted pressure data to a first threshold and/or comparing the adjusted pressure data to a second threshold.

In some embodiments, comparing the adjusted pressure data to the first threshold comprises determining if the adjusted pressure data is greater than the first threshold, and comparing the adjusted pressure data to the second threshold comprises determining if the adjusted pressure data is less than the second threshold.

In some embodiments, determining if the adjusted pressure data is greater than the first threshold comprises determining if the adjusted pressure data is greater than the first threshold for a first predefined latency period, and determining if the adjusted pressure data is less than the second threshold comprises determining if the adjusted pressure data is less than the second threshold for a second predefined latency period.

In some embodiments, the first predefined latency period and the second predefined latency period comprise either a time period or a number of operating cycles.

In accordance with various embodiments of the present disclosure, a device is provided. In some embodiments, the device comprises a finite state machine (FSM) configured to: detect, using pressure data from a pressure sensor, pressure indicative of whether the device is in water or not in water; transition, based on the detected pressure, between different states of the FSM; and determine, based on the detected pressure, a desired full-scale range of the pressure sensor.

The above summary is provided merely for purposes of summarizing some example embodiments to provide a basic understanding of some aspects of the disclosure. Accordingly, it will be appreciated that the above-described embodiments are merely examples and should not be construed to narrow the scope or spirit of the disclosure in any way. It will also be appreciated that the scope of the disclosure encompasses many potential embodiments in addition to those here summarized, some of which will be further described below.

### BRIEF DESCRIPTION OF THE DRAWINGS

The description of the illustrative embodiments are to be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 is a block diagram of an example device for detecting if a device is in water or not in water, in accordance with some embodiments of the present disclosure;
FIGS. 2A-C illustrate example pressure data of an example device for detecting if a device is in water or not in water, in accordance with some embodiments of the present disclosure;
FIGS. 3A-D illustrate example pseudocode of an example device for detecting if a device is in water or not in water, in accordance with some embodiments of the present disclosure; and
FIGS. 4A-C illustrate example results data of an example device for detecting if a device is in water or not in water, in accordance with some embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature can be optionally included in some embodiments, or it can be excluded.

Various embodiments of the present disclosure overcome the above technical challenges and difficulties and provide various technical improvements and advantages based on, for example, but not limited to, providing example devices and methods for detecting if a device is in water or not in water. Various embodiments of the present disclosure can be implemented in any suitable device, such as but not limited to mobile and wearable devices (e.g., mobile phones, smart watches, etc.).

Various embodiments of the present disclosure can be implemented in any suitable manner within a device. For example, various embodiments of the present disclosure are implemented in a microcontroller unit (MCU) of the device. In another example, various embodiments of the present disclosure are implemented in a pressure sensor whose pressure data is used to implement various embodiments.

In various embodiments, a finite state machine (FSM) is used to monitor pressure data from one or more pressure sensors within a device and determine if the device is in water or out of water. In various embodiments, the FSM switches between states based on the pressure data. In various embodiments, the FSM uses pressure data that has been adjusted to have a baseline of zero (rather than a baseline of, for example, about one bar when the device is out of water at sea level due to atmospheric pressure).

In various embodiments, the device has one pressure sensor that has two selectable full-scale ranges - a low full-scale (LFS) range and a high full-scale (HFS) range. For example, the LFS range of the pressure sensor is up to +/- 1.26 bar (126 kilopascals (kPa)) and the HFS range is up to +/- 6 bar (600 kPa). For example, the low range is desirable when the device is out of water because the atmospheric pressure at sea level is typically approximately one bar, and the high range is desirable when the device is in water because the pressure will increase and likely exceed 1.26 bar as the user dives deeper.

In various embodiments, the FSM is able determine, based on the pressure data, a desired full-scale range of the pressure sensor. In some embodiments, the FSM provides the desired full-scale range to another component (i.e., other than the component on which the FSM resides), such as the MCU of the device. In such an embodiment, the MCU of the device may communicate with the pressure sensor to select the full-scale range determined by the FSM.

In various embodiments, the FSM is able to automatically change the full-scale range of a pressure sensor from a first full-scale range to a second full-scale range (e.g., LFS to HFS) and/or from the second full-scale range to the first full-scale range (e.g., HFS to LFS) based on the determined desired full-scale range. In such an embodiment, the FSM may communicate directly with the pressure sensor to select the determined full-scale range. In one example embodiment, the LFS range is +/- 1260 hectopascal (hPa) (+/- 1.26 bar) and the HFS range is +/- 6060 hPa (+/- 6.06 bar).

An FSM is a computational model that can be (and is in various embodiments of the disclosure) implemented using sequential logic circuits. Generally, an FSM can be executed by dedicated hardware logic or by an MCU. Such hardware logic is typically developed and dedicated for executing such an FSM and is therefore very specialized and fully optimized. In contrast, an MCU generally executes compiled and generic code. As such, an MCU typically allows more flexibility but is typically less optimized with respect to dedicated hardware logic and therefore typically consumes more power. For example, in some embodiments the FSM is part of the hardware (e.g., programmable core) of the pressure sensor and is not part of any MCU controlling the device itself. In some alternative embodiments, the FSM is part of an MCU controlling the device itself. By using an FSM, embodiments of the present disclosure provide a WI/WO detection method implemented completely in hardware (e.g., in the programmable core of the pressure sensor), thereby providing a simpler, faster, and more robust method, with extremely low power consumption, as compared to one implemented in software/firmware that is executed by an MCU.

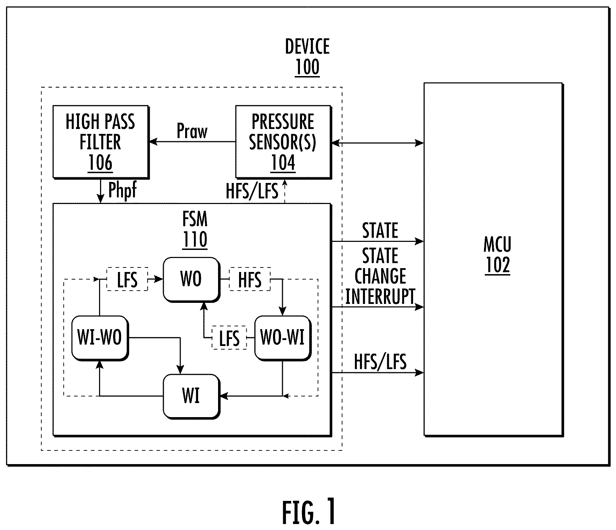

FIG. 1 illustrates a block diagram of an example device for detecting a water in condition (i.e., detecting that the device is in water) or a water out condition (i.e., detecting that the device is not in water), in accordance with an example embodiment of the present disclosure. The example device is, for example, a mobile phone or a smart watch. The example device 100 of FIG. 1 comprises an MCU 102, one or more pressure sensors 104, a high pass filter (HPF) 106, and an FSM 110. In various embodiments, the device 100 may comprise additional components to provide other functionality that is not relevant to this disclosure. In one example embodiment, the cutoff frequency of the HPF is 2.5 Hz. In various embodiments, the high pass filter (HPF) 106 is included in the FSM 110.

In various embodiments, the MCU 102 is the same MCU that controls many or most processes of the mobile device (which is termed the main MCU), including one or more applications ("apps"). Such processes of the mobile device may include applications that use information from the FSM 110. Such apps may include, for example, apps that are used when the device is out of water and apps that are used when the device is in water. For apps that are used when the device is out of water, it is desirable to use the information from the FSM to enable such apps when the FSM determines that the device is out of water and disable such apps when the FSM determines that the device is in water. For apps that are used when the device is in water, it is desirable to use the information from the FSM to enable such apps when the FSM determines that the device is in water and disable such apps when the FSM determines that the device is out of water.

Microcontroller unit 102 can be embodied in a number of different ways. In various embodiments, the use of the terms "MCU," "processor," "processing circuity," "controller," or "control circuitry" should be understood to include a single core processor, a multi-core processor, multiple processors internal to the device 100. In some example embodiments, MCU 102 may include one or more processing devices configured to perform independently. Alternatively, or additionally, MCU 102 may include one or more processor(s) configured in tandem via a bus to enable independent execution of operations, instructions, pipelining, and/or multithreading.

In an example embodiment, the MCU 102 is configured to execute instructions stored in a memory circuitry (not illustrated) accessible to the processor. Alternatively, or additionally, the MCU 102 is configured to execute hard-coded functionality. As such, whether configured by hardware or software methods, or by a combination thereof, MCU 102 may represent an entity (e.g., physically embodied in circuitry) capable of performing operations according to embodiments of the present disclosure while configured accordingly. Alternatively, or additionally, MCU 102 is embodied as an executor of software instructions, and the instructions may specifically configure the MCU 102 to perform the various algorithms embodied in one or more operations described herein when such instructions are executed. In some embodiments, the MCU 102 includes hardware, software, firmware, and/or a combination thereof that performs one or more operations described herein.

In various embodiments, the pressure sensor(s) 104 may comprise any suitable type of pressure sensor with any suitable range. For example, the pressure sensor(s) 104 may have two or more selectable ranges - a LFS range and an HFS range - as described above.

In various embodiments, the pressure sensor(s) 104 detects the pressure surrounding the device 100. For example, if the device is out of water at sea level, the pressure sensor(s) 104 will detect a pressure of about one bar. If the device is placed in water, the pressure sensor(s) 104 will detect an increase in pressure equal to about 1 bar for every 10 meters of depth.

In various embodiments, the raw pressure data (Praw) from the pressure sensor(s) 104 is provided to the HPF 106. The filtered pressure data (Phpf) from the HPF 106 is provided to the FSM 110. The output Phpf of the HPF 106 is a derivative of the raw pressure data Praw. An integral of the output Phpf of the HPF 106 is calculated by the FSM 110 (depending on the current state of the FSM).

By applying a derivative (by the HPF 106) and then an integral (by the FSM 110) of the raw pressure data, various embodiments of the present disclosure are able to replicate the raw pressure data, but with a baseline of zero bar (rather than the baseline of about one bar of the raw pressure data when the device is out of water at sea level). Having pressure data with a baseline of zero enables the device and method of various embodiments to use a consistent threshold for determining WO or WI status (the threshold is described below). This adjusted pressure data (i.e., derivative then integral) is used by the FSM to determine the appropriate state (described below).

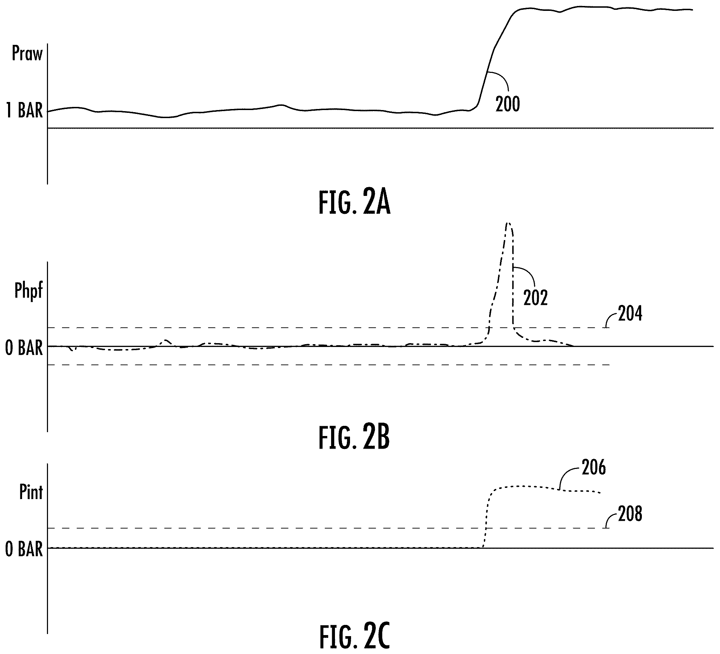

FIGS. 2A-C illustrate example pressure data of an example device, in accordance with some embodiments of the present disclosure. FIG. 2A illustrates raw pressure data Praw 200 from the pressure sensor(s) 104. As seen in FIG. 2A, the raw pressure data 200 goes from about one bar (i.e., the atmospheric pressure when the device is out of water at sea level) and increases substantially (the exact value of the increased pressure is not included) when the device is submerged in water (e.g., such as when a user wearing the device dives into water).

FIG. 2B illustrates filtered pressure data Phpf 202 from the HPF 106. As seen in FIG. 2B, the filtered pressure data Phpf 202 increases from a baseline of zero when the raw pressure data Praw increases in FIG. 2A but goes back down to the baseline of zero because the raw pressure data Praw is holding steady.

FIG. 2C illustrates adjusted pressure data Pint 206 after an integral is taken of the filtered pressure data Phpf 202. (The adjusted pressure data is referred to herein as Pint because it is the integrated pressure data from the HPF.) As seen in FIG. 2C, the adjusted pressure data Pint 206 essentially replicates the raw pressure data Praw, but at a baseline of zero. In various embodiments, the adjusted pressure data, because it is an integral, only increases or decreases when there is a relevant change to the raw pressure data.

Returning to FIG. 1, in various embodiments the FSM 110 has four possible states - two stable states and two transition states. The first stable state comprises a water out (WO) state indicating that the device is not in water, and the second stable state comprises a water in (WI) state indicating that the device is in water. The first transition state comprises a water out to water in (WO-WI) state indicating that the device is transitioning from not in water (WO) to in water (WI) and the second transition state comprises a water in to water out (WI-WO) state indicating that the device is transitioning from in water (WI) to not in water (WO). As illustrated in FIG. 1 and described further below, the state of the FSM may go from WO to WO-WI or to WI, from WO-WI to WI or to WO, from WI to WI-WO or to WO, or from WI-WO to WO or to WI.

As described above, in various embodiments the FSM 110 is able determine, based on the pressure data, a desired full-scale range of the pressure sensor. The determined full-scale range is, for example, provided to the MCU 102 or provided directly to the pressure sensor(s) 104 (as illustrated by the dashed line arrow between the FSM 110 and the pressure sensor(s) 104) to automatically select the full-scale range (e.g., LFS range or HFS range). As illustrated in FIG. 1, in various embodiments the FSM 110 may determine the desired full-scale range when transitioning from one state to another state. This is illustrated by the dashed line blocks LFS and HFS in the FSM 110 in FIG. 1. In the illustrated embodiment of FIG. 1, the FSM 110 selects the LFS range when the state transitions from WI-WO to WO and when the state transitions from WO-WI to WO, and the FSM selects the HFS range when the state transitions from WO to WO-WI.

As described above, the FSM 110 is part of the hardware of the pressure sensor(s) 104. This is illustrated by the dashed line block around the pressure sensor(s) 104, the HPF 106, and the FSM 110.

In various embodiments, information is provided from the FSM 110 to the MCU 102. For example, as illustrated in FIG. 1, the current state of the FSM 110 is provided to the MCU 102, an interrupt is provided to the MCU 102 whenever the state of the FSM 110 changes, and/or an indication of the desired full-scale range of the pressure sensor is send to the MCU 102.

In various embodiments, the operation of the FSM starts with the FSM in the WO state, as this is the most likely state. In various embodiments, the FSM transitions from the WO state to the WO-WI state or the WI state if the pressure integral is greater than a predefined WI threshold. In various embodiments, the FSM transitions from the WI-WO state to the WI state if the pressure integral is greater than the predefined WI threshold. In various embodiments, the FSM transitions from the WI state to the WI-WO state or the WO state if the pressure integral is less than a predefined WO threshold. In various embodiments, the FSM transitions from the WO-WI state to the WO state if the pressure integral is less than the predefined WO threshold. In some embodiments, the WI threshold and the WO threshold are the same. In various embodiments, the range of the WI threshold and the WO threshold is between 1 hPa (0.001 bar) and 10 hPa (0.01 bar). In one example embodiment, the WI threshold and the WO threshold are 5 hPa (0.005 bar). In various embodiments, hysteresis on WI threshold and WO threshold can be used. In one example embodiment, the range of the hysteresis on WI threshold and WO threshold is between 0.1 hPa (0.0001 bar) and 1 hPa (0.001 bar). In one example embodiment, the hysteresis on WI threshold and WO threshold is 0.5 hPa (0.0005 bar).

In various embodiments, the FSM transitions from the WO-WI state to the WI state if the pressure integral is greater than the predefined WI threshold for a predefined length of time which is defined as an amount of time (e.g., 0.5 seconds) or is defined as a number of output cycles of the pressure sensor (e.g., 25 cycles, which at an output data rate of 50 Hertz would be 0.5 seconds). In various embodiments, the FSM transitions from the WI-WO state to the WO state if the pressure integral is less than the predefined WO threshold for a predefined length of time (which, again, is defined as an amount of time or as a number of operational cycles). In various embodiments, the range of the predefined length of time is between 0.1 seconds (5 cycles at 50 Hertz) and 1.0 seconds (50 cycles at 50 Hertz). In one example embodiment, the predefined length of time for both the WI-WO to WO and WO-WI to WI transitions is 0.5 seconds (25 cycles at 50 Hertz).

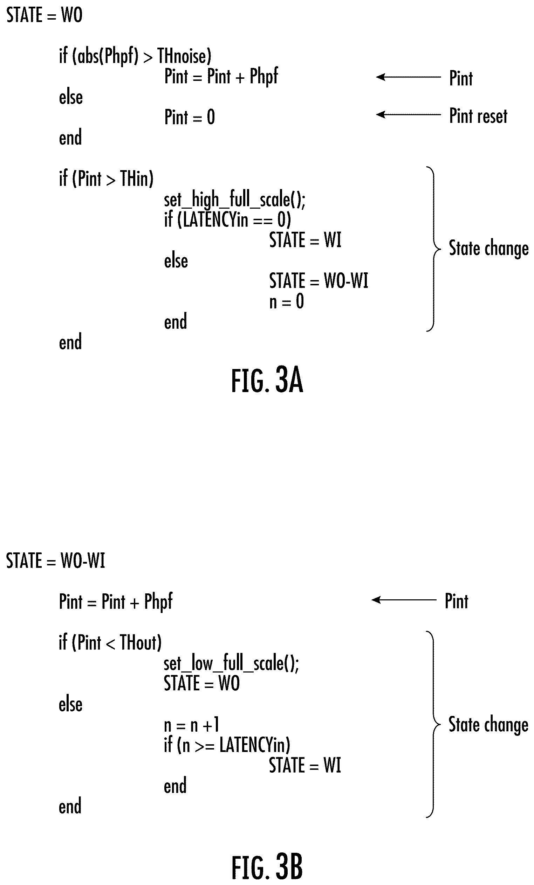

Reference will now be made to FIGS. 3A-D which provide example pseudocode of an example device for detecting if a device is in water or not in water which illustrate example steps, processes, procedures, and/or operations of the FSM in accordance with various embodiments of the present disclosure. In various embodiments, when the FSM is initialized the Pint value is set to zero.

FIG. 3A provides example pseudocode for operation of the FSM when in the WO state. In various embodiments, the FSM determines if the absolute value of the pressure data from the HPF (abs(Phpf)) is greater than a predefined noise threshold (THnoise). In various embodiments, the noise threshold is predefined based on experimental data. If abs(Phpf) > THnoise, then the adjusted pressure value Pint is increased by the current Phpf value (Pint = Pint + Phpf). If abs(Phpf) <= THnoise, the adjusted pressure value Pint is reset to zero. The noise threshold 204 is illustrated in FIG. 2B. In various embodiments, the range of the noise threshold is between 0.05 hPa (0.00005 bar) and 0.5 hPa (0.0005 bar). In one example embodiment, the noise threshold is 0.2 hPa (0.0002 bar).

In various embodiments, the FSM then determines if the adjusted pressure value Pint is greater than a predefined WI threshold (THin). FIG. 2C illustrates an example predefined WI threshold 208. In various embodiments, if Pint > THin, the full scale of the pressure sensor is set to high (HFS). In various embodiments, the FSM then determines if a latency timer or counter is enabled. Such a latency timer or counter is used to determine how long the FSM is in a transition state (WO-WI or WI-WO), which as described above is an amount of time or number of operational cycles. (For simplicity, the latency timer or counter will be referred to herein below as a latency counter.) In various embodiments, there is a WI latency counter with a WI latency counter threshold (LATENCYin) and a WO latency counter with a WO latency counter threshold (LATENCYout). In some embodiments, the WI latency counter threshold and the WO latency counter threshold are the same.

If the FSM determines that the latency counter is disabled (LATENCYin == 0), then the state is transitioned from WO to WI (i.e., without going to the WO-WI transition state). If the FSM determines that the latency counter is enabled, then the state is transitioned from WO to WO-WI and the latency counter is reset to zero (n = 0).

FIG. 3B provides example pseudocode for operation of the FSM when in the WO-WI state. In various embodiments, the FSM continues to increase the adjusted pressure value Pint by the current Phpf value (Pint = Pint + Phpf). The FSM then determines if the adjusted pressure value Pint is less than the predefined WO threshold THout. In some embodiments, if Pint < THout the full scale of the pressure sensor is set to low (LFS) and the FSM transitions to the WO state. If the adjusted pressure value Pint is not less than the predefined WO threshold THout, the FSM increments the WI latency counter (n = n + 1) and determines if the WI latency counter has reached the WI latency counter threshold (n >= LATENCYin). If so, the FSM transitions to the WI state.

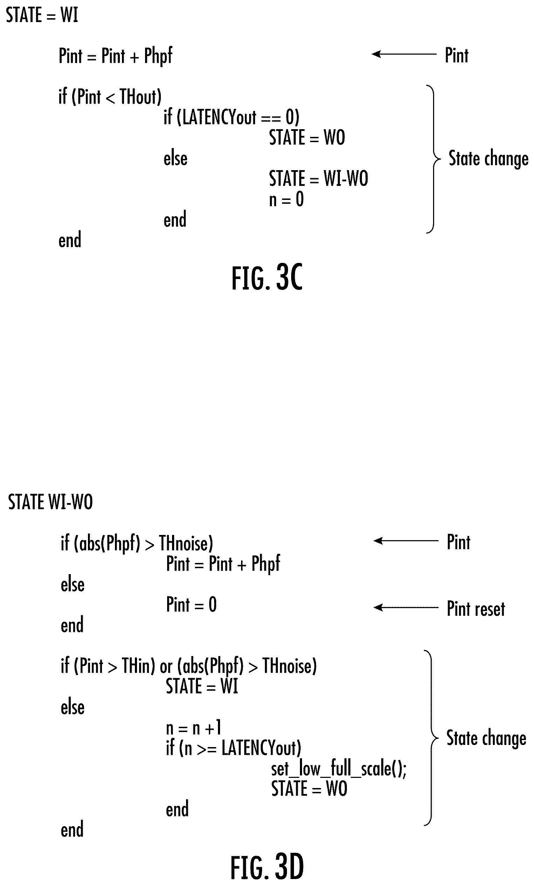

FIG. 3C provides example pseudocode for operation of the FSM when in the WI state. In various embodiments, the FSM continues to increase the adjusted pressure value Pint by the current Phpf value (Pint = Pint + Phpf). The FSM then determines if the adjusted pressure value Pint is less than the predefined WO threshold THout). If Pint < THout, the FSM then determines if a latency timer or counter is enabled. If the FSM determines that the latency counter is disabled (LATENCYin == 0), then the state is transitioned from WI to WO (i.e., without going to the WI-WO transition state). If the FSM determines that the latency counter is enabled, then the state is transitioned from WI to WI-WO and the latency counter is reset to zero (n = 0).

FIG. 3D provides example pseudocode for operation of the FSM when in the WI-WO state. In various embodiments, the FSM determines if the absolute value of the pressure data from the HPF (abs(Phpf)) is greater than the predefined noise threshold (THnoise). If abs(Phpf) > THnoise, then the adjusted pressure value Pint is increased by the current Phpf value (Pint = Pint + Phpf). If abs(Phpf) <= THnoise, the adjusted pressure value Pint is reset to zero. In various embodiments, the FSM then determines if the adjusted pressure value Pint is greater than a predefined WI threshold (THin). If Pint > THin or if abs(Phpf) > THnoise, then the FSM transitions to the WI state. If neither of those is true, the FSM increments the WO latency counter (n = n + 1) and determines if the WO latency counter has reached the WO latency counter threshold (n >= LATENCYout). If so, in various embodiments the full scale of the pressure sensor is set to low (LFS) and the FSM transitions to the WO state.

In various embodiments, the integral of the derivative is enabled in both WO and WI states. In various embodiments, the integral reset logic prevents the reconstructed signal from diverging in the WO state. In various embodiments, the noise threshold is tuned based on scenarios where the integral should not be incremented (e.g., shower, elevator, washing hands, etc.). In various embodiments, during the WI state, there is no integral reset logic to allow the reconstructed integral signal shape to be the same as Praw.

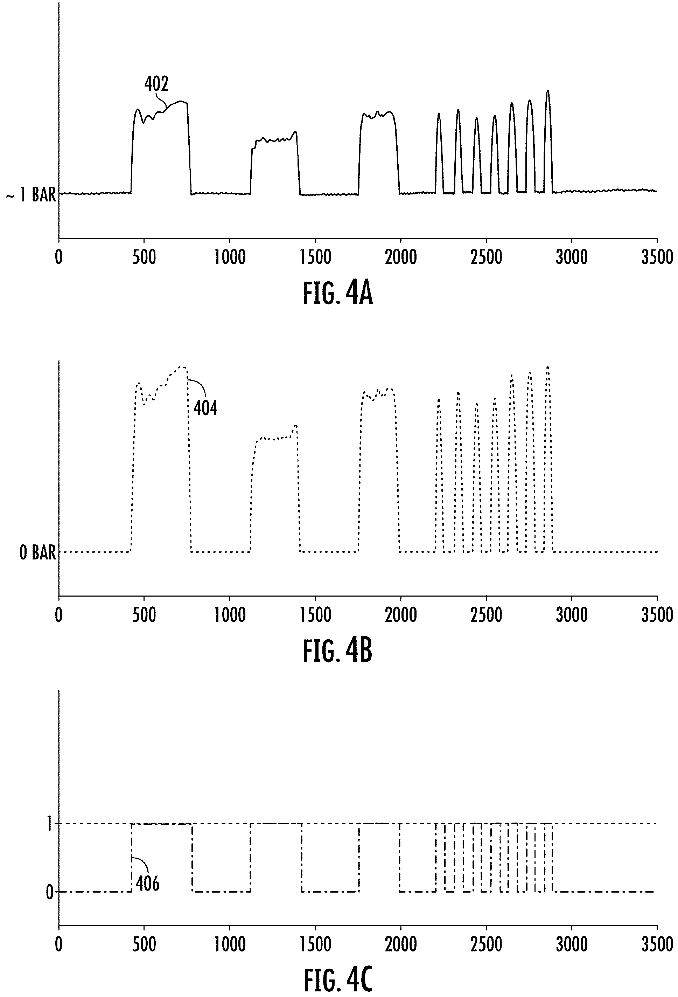

FIGS. 4A-C illustrate example results produced by an example device for detecting if a device is in water or not in water, in accordance with some embodiments of the present disclosure. FIG. 4A shows example raw pressure data 402. FIG. 4B shows example adjusted pressure data 404. FIG. 4C shows the state 406 of the FSM (0 for WO and 1 for WI). As seen in FIGS. 4A-C, the adjusted pressure data 404 closely follows the raw pressure data 402, and the state 406 changes from WO (0) to WI (1) when the adjusted pressure data 404 is above a threshold (dashed line) and changes from WI (1) to WO (0) when the adjusted pressure data 404 is below the threshold.

### Conclusion

Many modifications and other embodiments of the disclosures set forth herein will come to mind to one skilled in the art to which these disclosures pertain having the benefit of teachings presented in the foregoing descriptions and the associated drawings. Although the figures only show certain components of the apparatus and systems described herein, it is understood that various other components is used in conjunction with the system. Therefore, it is to be understood that the disclosures are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps can be involved. Although specific terms are employed herein, they are used in a generic and descriptive sense only and not for purposes of limitation.

While various embodiments in accordance with the principles disclosed herein have been shown and described above, modifications thereof can be made by one skilled in the art without departing from the spirit and the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above.
While this detailed description has set forth some embodiments of the present disclosure, the appended claims cover other embodiments of the present disclosure which differ from the described embodiments according to various modifications and improvements. For example, the appended claims can cover any form of device which has a pressure sensor, including any form of mobile device or wearable device.

## Claims

1. A method for detecting if a device (100) is in water or not in water, the method comprising:
detecting, by a finite state machine, FSM, (110) using pressure data (Praw, 200) from a pressure sensor (104), pressure indicative of whether the device is in water or not in water;
transitioning, by the FSM based on the detected pressure (Pint, 206), between different states (WO, WI, WO-WI, WI-WO) of the FSM; and
determining, by the FSM based on the detected pressure, a desired full-scale range (LFS, HFS) of the pressure sensor.

2. The method of claim 1, further comprising:
automatically changing from a first full-scale range (LFS) of the pressure sensor (104) to a second full-scale range (HFS) of the pressure sensor (104) or from the second full-scale range (HFS) of the pressure sensor (104) to the first full-scale range (LFS) of the pressure sensor (104) based on the determined desired full-scale range of the pressure sensor.

3. The method of claim 1, further comprising adjusting the pressure data (Praw, 200) from the pressure sensor (104) to have a baseline of zero bar;
wherein the adjusted pressure data (Pint, 206) is used by the FSM (110) to detect pressure indicative of whether the device (100) is in water or not in water.

4. The method of claim 3, wherein adjusting the pressure data (Praw, 200) from the pressure sensor to have a baseline of zero bar comprises calculating an integral (Pint, 206) of a derivative (Phpf, 202) of the pressure data (Praw, 200) from the pressure sensor (104).

5. The method of claim 4, further comprising passing the pressure data (Praw, 200) from the pressure sensor (104) through a high pass filter (106) to obtain the derivative (Phpf, 202) of the pressure data from the pressure sensor.

6. The method of claim 5, further comprising:
comparing an absolute value of the derivative of the pressure data from the high pass filter (abs(Phpf)) to a noise threshold (THnoise, 204);
if the absolute value of the derivative of the pressure data from the high pass filter exceeds the noise threshold, adding the derivative of the pressure data from the high pass filter (Phpf, 202) to an immediately preceding calculated integral of the derivative of the pressure data from the pressure sensor; and
if the absolute value of the derivative of the pressure data from the high pass filter does not exceed the noise threshold, resetting the integral of the derivative of the pressure data from the pressure sensor to zero.

7. The method of claim 5, wherein the different states of the FSM (110) comprise (i) a water out (WO) state indicating that the device (100) is not in water, ii) a water in (WI) state indicating that the device (100) is in water, iii) a water out to water in (WO-WI) state indicating that the device (100) is transitioning from not in water to in water, and iv) a water in to water out (WI-WO) state indicating that the device (100) is transitioning from in water to not in water.

8. The method of claim 5, wherein transitioning between different states (WO, WI, WO-WI, WI-WO) of the FSM (110) based on the detected pressure changes comprises comparing the adjusted pressure data (Pint, 206) to a first threshold (THin, 208) and/or comparing the adjusted pressure data to a second threshold (THout).

9. The method of claim 8, wherein comparing the adjusted pressure data (Pint, 206) to the first threshold (THin, 208) comprises determining if the adjusted pressure data is greater than the first threshold; and
wherein comparing the adjusted pressure data (Pint, 206) to the second threshold (THout) comprises determining if the adjusted pressure data is less than the second threshold.

10. The method of claim 9, wherein determining if the adjusted pressure data (Pint, 206) is greater than the first threshold (THin, 208) comprises determining if the adjusted pressure data is greater than the first threshold for a first predefined latency period (LATENCYin); and
wherein determining if the adjusted pressure data (Pint, 206) is less than the second threshold (THout) comprises determining if the adjusted pressure data is less than the second threshold for a second predefined latency period (LATENCYout).

11. A device (100) comprising
a finite state machine, FSM, (110) configured to carry out the method of anyone of claims 1-10.
